# EUROPEAN PATENT APPLICATION

(11) **EP 4 756 934 A1**
(43) Date of publication of application: **10.06.2026**
(21) Application number: 25188228.8
(22) Date of filing: 08.07.2025
(51) Int. Cl.: H01M 4/70, H01M 10/04, H01M 10/0525, H01M 10/0567, H01M 10/0569, H01M 10/0587, H01M 4/02

(54) **WOUND LITHIUM-ION BATTERY**

(30) Priority: 06.12.2024 CN 202411783442
(71) Applicant: Zhuhai CosMX Battery Co., Ltd., Zhuhai, Guangdong 519180 (CN)
(72) Inventor: ZENG, Changan, Zhuhai, 519180 (CN)
(74) Representative: Murgitroyd & Company

(57) **Abstract**

The present disclosure relates to the technical field of lithium batteries and provides a wound-type lithium-ion battery. In the wound-type lithium-ion battery, a plurality of recessed portions are provided on one side of the negative electrode current collector in the single-sided area of the negative electrode plate at the center of the jelly roll, where the negative electrode active layer is not provided. Additionally, the projections of the leading end of the first negative electrode active layer and the leading end of the second negative electrode active layer in different bending regions overlap in the thickness direction of the jelly roll. The combined effect of the recessed portions and the overlapping projections of the negative electrode active layers can significantly increase the liquid retention at the center of the jelly roll, improve the wettability of the electrolyte solution to the electrode plates, thereby enhancing the cycling performance of the battery and reducing lithium deposition.

## Description

### FIELD OF THE INVENTION

The present invention relates to the technical field of lithium batteries, and in particular, to a wound lithium-ion battery.

### BACKGROUND OF THE INVENTION

In the production process of wound lithium batteries, in order to improve the energy density of the battery, the gap between battery cells is usually minimized to arrange the battery cells more tightly. This tight winding method can reduce the overall volume of the battery, thereby accommodating more battery cells in a limited space and improving the energy density of the battery. However, this tight winding method also results in a smaller central gap between the battery cells, and the storage space for the electrolyte solution is correspondingly reduced. The electrolyte solution may not fully infiltrate all areas of the battery cells, leading to poor wettability, and affecting the performance and cycle life of the battery.

### BRIEF DESCRIPTION OF THE INVENTION

The purpose of the present invention is to overcome the above-mentioned problems in the conventional technology and provide a wound lithium-ion battery. Specifically, in the single-sided area of the negative electrode plate located at the center of the jelly roll, a plurality of recessed portions are provided on the side of the negative electrode current collector without the negative electrode active layer, and the projections of the first negative electrode active layer's end and the second negative electrode active layer's end in the thickness direction of the jelly roll overlaps in different bending regions. The combined effect of the recessed portion and the overlapping projection of the negative electrode active layers can significantly increase the liquid retention at the center of the jelly roll, improve the wettability of the electrolyte solution to the electrode plates, thereby enhancing the cycling performance of the battery and reducing lithium deposition.

To achieve the above goals, the present invention provides a wound lithium-ion battery, including a positive electrode plate, a negative electrode plate, an electrolyte solution, and a separator located between the positive electrode plate and the negative electrode plate. The positive electrode plate, the separator, and the negative electrode plate are stacked and wound multiple times along a winding direction to form a jelly roll.

The negative electrode plate includes:
a negative electrode current collector layer, including a first surface and a second surface oppositely arranged along a second direction, and a first direction is perpendicular to the second direction,
a first negative electrode active layer located on the first surface and a second negative electrode active layer located on the second surface; along the first direction, a leading end of the first negative electrode active layer extends beyond a leading end of the second negative electrode active layer; a portion where the leading end of the first negative electrode active layer extends beyond the leading end of the second negative electrode active layer is a single-sided area of the negative electrode plate, and
at least a portion of the second surface in the single-sided area is recessed toward the first surface to form a plurality of first recessed portions; a depth h1 of the first recessed portion is 2 µm-30 µm.

The negative electrode plate includes a straight region and a bending region, where the leading end of the first negative electrode active layer and the leading end of the second negative electrode active layer are located in different bending regions, and the projections of the leading end of the first negative electrode active layer and the leading end of the second negative electrode active layer overlap in the thickness direction of the jelly roll.

The electrolyte solution includes fluoroethylene carbonate(FEC), and a mass proportion of fluoroethylene carbonate is 0.5%-4% based on the total mass of the electrolyte solution.

The present invention adopts the above technical solutions and has the following beneficial effects.

The wound lithium-ion battery provided by the present invention, with the combined effect of the recessed portion and the overlapping projection of the negative electrode active layer, can significantly increase the liquid retention at the center of the jelly roll, improve the wettability of the electrolyte solution to the electrode plates, thereby enhancing the cycling performance of the battery and reducing lithium deposition.

The wound lithium-ion battery provided by the present invention, by adjusting the FEC content in the electrolyte solution to a lower range, can reduce the corrosion of the negative electrode current collector by FEC; the combined effect of providing the recessed portion on the single-sided area of the negative electrode plate and reducing the FEC content in the electrolyte can further enhance the cycling performance of the battery.

The endpoints and any values disclosed in the scope of this document are not limited to the precise range or value, and these ranges or values should be understood to include values close to these ranges or values. For numerical ranges, the endpoint values between various ranges, the endpoint values of various ranges and individual point values, as well as individual point values, can be combined with each other to obtain one or more new numerical ranges, which should be considered as specifically disclosed in this document. In this text, unless otherwise specified, the data range includes the endpoints.

### BRIEF DESCRIPTION OF THE DRAWINGS

FIG. 1 is a schematic structural diagram of a jelly roll in an embodiment.
FIG. 2 is a schematic structural diagram of a negative electrode plate in an embodiment.
FIG. 3 is a schematic structural diagram of a negative electrode plate with recessed portion in a single-sided area in an embodiment.
FIG. 4 is a schematic structural diagram of a negative electrode plate with recessed portion and protruding portion in a single-sided area in an embodiment.
FIG. 5 is a schematic structural diagram of a negative electrode plate with a plurality of recessed grooves in an embodiment.
FIG. 6 is a schematic cross-sectional structural diagram of a positive electrode plate with recessed portion and protruding portion in an embodiment.
FIG. 7 is a schematic structural diagram of a positive electrode plate with recessed portion and protruding portion in an embodiment.

### DETAILED DESCRIPTION OF THE INVENTION

The specific embodiments of the present invention will be described in detail below. It should be understood that the specific embodiments set forth herein are only for illustrating and explaining the present invention, and are not intended to limit the present invention.

Unless otherwise defined, all scientific and technical terms used in the present invention have the same meanings as commonly understood by those skilled in the technical field to which the present invention pertains.

In this invention, the term "C4-C8 carboxylic acid ester" refers to a carboxylic acid ester in which the number of carbon atoms in the hydrocarbon group (i.e., the carbon chain connected to the carboxyl group) is 4 to 8.

The present invention provides a wound lithium-ion battery, including a positive electrode plate, a negative electrode plate, an electrolyte solution, and a separator located between the positive electrode plate and the negative electrode plate. The positive electrode plate, the separator, and the negative electrode plate are stacked and wound multiple times along a winding direction to form a jelly roll;

The negative electrode plate includes:
a negative electrode current collector layer, including a first surface and a second surface oppositely arranged along a second direction, where a first direction is perpendicular to the second direction;
a first negative electrode active layer located on the first surface and a second negative electrode active layer located on the second surface; along the first direction, a leading end of the first negative electrode active layer extends beyond a leading end of the second negative electrode active layer; a portion where the leading end of the first negative electrode active layer extends beyond the leading end of the second negative electrode active layer is a single-sided area of the negative electrode plate; and
at least a portion of the second surface in the single-sided area is recessed toward the first surface to form a plurality of first recessed portions; a depth h1 of the recessed portion is 2 µm-30 µm.

The negative electrode plate includes a straight region and a bending region, where the leading end of the first negative electrode active layer and the leading end of the second negative electrode active layer are located in different bending regions, and the projections of the leading end of the first negative electrode active layer and the leading end of the second negative electrode active layer overlap in the thickness direction of the jelly roll.

The electrolyte solution includes fluoroethylene carbonate, and the mass proportion of fluoroethylene carbonate is 0.5%-4% based on the total mass of the electrolyte solution.

In present invention, "a leading end of the first negative electrode active layer" and "a leading end of the second negative electrode active layer" refer to the side ends of the first negative electrode active layer and the second negative electrode active layer located at the winding start end of the wound lithium-ion battery. "The projections of the leading end of the first negative electrode active layer and the leading end of the second negative electrode active layer overlap" refers to at least partial overlap in the vertical projection along the thickness direction of the battery cell.

For example, based on the total mass of the electrolyte solution, the mass proportion of fluoroethylene carbonate can be, for example, 0.5%, 0.8%, 1%, 1.5%, 2%, 2.5%, 3%, 3.5%, 4.0%, preferably 0.5%-2%.

In this invention, in the single-sided area of the negative electrode plate located at the center of the jelly roll, a plurality of recessed portions are provided on the side of the negative electrode current collector without the negative electrode active layer. The recessed portion can store more electrolyte; meanwhile, along the thickness direction of the jelly roll, the overlapping projections of the leading end of the first negative electrode active layer and the leading end of the second negative electrode active layer in different bending regions can increase the gap at the center of the jelly roll, providing a larger liquid storage space to store more electrolyte solution. The combined effect of the recessed portion and the overlapping projections of the negative electrode active layer can significantly increase the liquid retention at the center of the jelly roll, improve the wettability of the electrolyte solution to the electrode plates, thereby enhancing the cycling performance of the battery and reducing lithium deposition.

In addition, fluoroethylene carbonate (FEC) in the electrolyte solution can form a more stable and denser SEI (Solid Electrolyte Interface) film, effectively protecting the negative electrode and preventing further decomposition of the electrolyte solution. However, FEC will interact with the strong Lewis acid PF₅ produced by the decomposition of LiPF₆ under high temperature conditions, resulting in a de-F reaction, generating HF, which will cause corrosion on the surface of the negative electrode current collector. Moreover, setting the recessed portions in the single-sided area of the negative electrode plate will increase the surface area of the negative electrode current collector, further exacerbating the corrosion of the negative electrode current collector. The corrosion of the negative electrode current collector will increase battery internal resistance, reduce the bonding force between the negative electrode active material and the negative electrode current collector, lower cycle capability of the battery , and affect safety of the battery. This invention adjusts the FEC content in the electrolyte solution to be 0.5%-4%, which not only ensures FEC participation in forming the SEI film on the negative electrode but also reduces corrosion of the negative current collector by FEC. The combined effect of providing the recessed portions on the single-sided area of the negative electrode plate and reducing the FEC content in the electrolyte can further enhance the cycling performance of the battery.

This invention increases the liquid storage space in the middle of the battery cell by adjusting the jelly roll structure design, improving the battery's liquid retention.

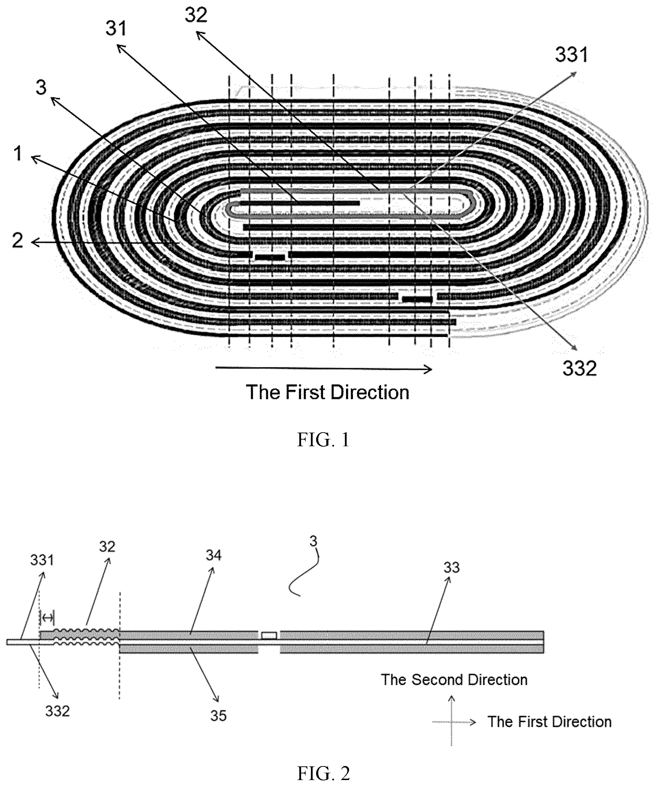

In some embodiments, as shown in FIG. 1, the positive electrode plate 1, the separator 2, and the negative electrode plate 3 are stacked and wound multiple times along the winding direction to form the jelly roll. The winding direction is the length direction of the negative electrode plate 3 (the first direction). The negative electrode plate 3 at the center of the jelly roll includes a bare foil region 31 of the negative electrode current collector and a single-sided area 32 with the negative electrode active layer on one side.

In some embodiments, the structure of the negative electrode plate when not wound is shown in FIG. 2. The negative electrode plate 3 includes a negative electrode current collector layer 33, a first negative electrode active layer 34, and a second negative electrode active layer 35. Along the second direction, the negative electrode current collector layer 33 includes a first surface 331 and a second surface 332. The first negative electrode active layer 34 is located on the first surface 331, and the second negative electrode active layer 35 is located on the second surface 332. As shown in FIG. 1 and FIG. 2, when the negative electrode plate 3 is wound with the positive electrode plate 1 and the separator 2 to form a jelly roll, the leading end of the first negative electrode active layer 34 will extend beyond the leading end of the second negative electrode active layer 35 to form a single-sided area 32. In the single-sided area 32, only the first surface 331 of the negative electrode current collector layer 33 is provided with the first negative electrode active layer 34, and the second surface 332 is the exposed negative electrode current collector layer 33 (also known as bare foil).

In some embodiments, a part or all of the second surface in the single-sided area is recessed towards the direction of the first surface to form a plurality of first recessed portions.

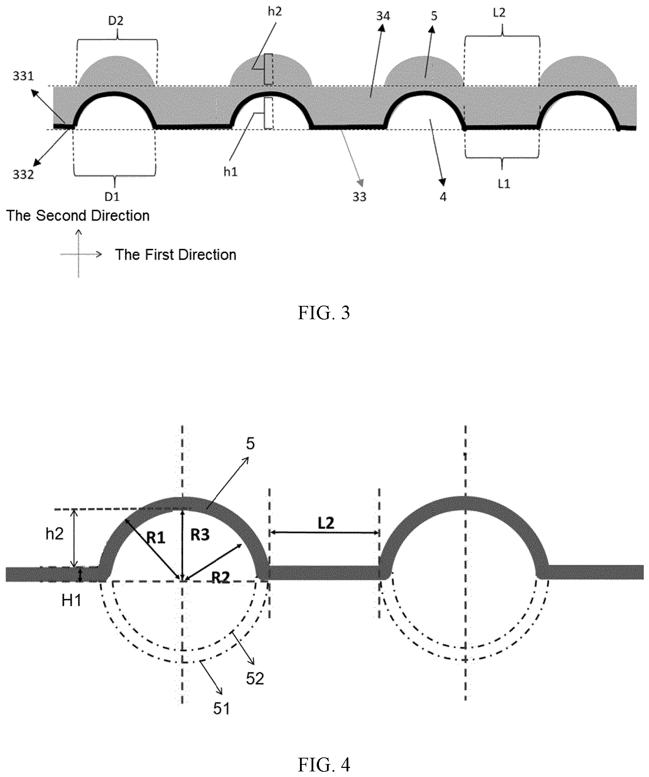

In some embodiments, a depth h1 of the first recessed portion is 2 µm-30 µm, for example, it can be 2 µm, 5 µm, 8 µm, 10 µm, 12 µm, 15 µm, 18 µm, 20 µm, 22 µm, 25 µm, 28 µm, 30 µm, or any point value within the range composed of the above two-point values, preferably 5 µm-20 µm. The "depth of the first recessed portion" can be interpreted as the maximum vertical distance (along the second direction) from the top of the first recessed portion near the negative electrode current collector to the second surface of the negative electrode plate, as shown by h1 in FIG. 3. Further adjusting the depth of the first recessed portion to meet the above range can avoid the depth of the first recessed portion being too deep, which may cause the structure of the recessed portion to be fragile and easily broken through mechanical extrusion and wear, as well as reduce the lithium intercalation and deintercalation rate of the negative electrode active particles and pulverization of the negative electrode active material, and lead to continuous rupture and regeneration of the SEI film, affecting the thickness uniformity of the SEI film and the cycling performance of the battery; it can also avoid the depth of the first recessed portion being too shallow, which cannot provide sufficient liquid storage space, resulting in insufficient liquid retention of the electrolyte solution, and requiring the addition of more FEC to reduce the decomposition of the electrolyte solution, but the increase in FEC content will lead to more severe corrosion of the negative electrode current collector, which is not conducive to the formation of the SEI film and cannot effectively improve the cycling performance of the battery.

In some embodiments, an average spacing L1 between adjacent first recessed portions is 0.5 mm-10 mm, for example, it can be 0.5 mm, 0.7 mm, 0.9 mm, 1 mm, 2 mm, 3 mm, 4 mm, 5 mm, 6 mm, 7 mm, 8 mm, 9 mm, 10 mm, or any point value within the range composed of the above two-point values, preferably 0.5 mm-4 mm. The "average spacing between adjacent first recessed portions" can be interpreted as the shortest straight distance on the surface of the negative electrode plate between the edges of two adjacent first recessed portions in the length direction of the negative electrode plate, recorded as the average spacing between adjacent first recessed portions, as shown by L1 in FIG. 3. When the average spacing between adjacent first recessed portions is within the above range, it can control the size of the first recessed portion, arrange the density within a suitable range, and control the number of the first recessed portion, which can effectively improve the storage of the electrolyte solution, enhance the wettability of the electrolyte solution to the electrode plates, and avoid the problem of structural instability in the single-sided area of the negative electrode plate caused by too small average spacing.

In some embodiments, a diameter D1 of the first recessed portion is 0.2 mm-6 mm, for example, it can be 0.2 mm, 0.5 mm, 1 mm, 1.5 mm, 2 mm, 2.5 mm, 3 mm, 3.5 mm, 4 mm, 4.5 mm, 5 mm, 5.5 mm, 6 mm, or any point value within the range composed of the above two-point values, preferably 0.3 mm-2 mm. The "diameter of the first recessed portion" can be interpreted as the maximum straight-line distance between two edges of a first recessed portion in a direction parallel to the negative electrode plate, as shown by D1 in FIG. 3. Further adjusting the diameter of the first recessed portion within the above range can avoid the diameter of the first recessed portion being too large, which may cause physical structural damage to the single-sided area of the negative electrode, leading to the fragmentation of the recessed portion structure, as well as reduce the lithium intercalation and deintercalation rate of the negative electrode active particles and pulverization of the negative electrode active material, and lead to continuous rupture and regeneration of the SEI film, affecting the thickness uniformity of the SEI film and the cycling performance of the battery; it can also avoid the diameter being too small, which cannot provide sufficient liquid storage space, resulting in insufficient liquid retention of the electrolyte solution, and requiring the addition of more FEC to reduce the decomposition of the electrolyte solution, but the increase in FEC content will lead to more severe corrosion of the negative electrode current collector, which is not conducive to the formation of the SEI film and cannot effectively improve the cycling performance of the battery.

In some embodiments, as shown in FIG. 3, in the single-sided area 32 of the negative electrode plate 3, at least part of the second surface 332 is recessed towards the first surface 331 to form a plurality of first recessed portions 4. Correspondingly, a plurality of first protruding portions 5 are formed on the first surface 331. The first recessed portion 4 and the first protruding portion 5 can be formed by an embossing process. The gaps formed between the plurality of protruding portion 5 on the first surface 331 and the positive electrode plate 1 can also provide more liquid storage space, further improving the liquid retention of the wound battery.

In some embodiments, the outer surface of the first protruding portion is provided with a first circumscribed sphere, and the inner surface of the first protruding portion is provided with a second circumscribed sphere. The first circumscribed sphere and the second circumscribed sphere share a common center. The radius of the first circumscribed sphere is defined as R1 mm, and the radius of the second circumscribed sphere is defined as R2 mm. A ratio of R1 to R2 satisfy that: R1/R2=1.01-1.1, which can be, for example, 1.01, 1.02, 1.03, 1.04, 1.05, 1.06, 1.07, 1.08, 1.09, 1.1, or any point value within the range composed of the above two-point values.

In some embodiments, as shown in FIG. 4, the outer surface of the first protruding portion 5 is provided with a first circumscribed sphere 51, and the inner surface of the first protruding portion 5 is provided with a second circumscribed sphere 52. The first circumscribed sphere 51 and the second circumscribed sphere 52 share a common center. When the radius R1 of the first circumscribed sphere 51 satisfies the above range, it can avoid the ratio R1/R2 being too large, that is, the flatness of the first protruding portion being too large, which makes the gaps between the plurality of protruding portions on the first surface and the positive electrode plate too small, resulting in insufficient liquid retention of the electrolyte solution, and requiring the addition of more FEC to reduce the decomposition of the electrolyte solution, but the increase in FEC content will lead to more severe corrosion of the negative electrode current collector, which is not conducive to the formation of the SEI film and cannot effectively improve the cycling performance of the battery.

In some embodiments, the radius R1 of the first circumscribed sphere is 0.15 mm-3 mm, for example, is 0.15 mm, 0.5 mm, 1 mm, 1.5 mm, 2 mm, 2.5 mm, 3 mm, or any point value within the range composed of the above two-point values. In some embodiments, the radius R2 of the second circumscribed sphere is 0.01 mm-3 mm, for example, is 0.01 mm, 0.1 mm, 0.5 mm, 1 mm, 1.5 mm, 2 mm, 2.5 mm, 3 mm, or any point value within the range composed of the above two-point values. By limiting the diameter of the inner and outer surfaces of the first protruding portion, the projection area of the first protruding portion in the direction perpendicular to the thickness of the negative electrode plate can be adjusted. When R1 < 0.1 mm or R2 < 0.1 mm, the projection area of the protruding portion is too small, and the protruding portion is too sharp, which can easily cause damage to the negative electrode plate. When R1 > 3 mm or R2 > 3 mm, the projection area of the protruding portion is too large, making the protruding portion prone to excessive deformation under the action of compressive force, tensile force, and cyclic expansion force during the process, resulting in the collapse of the protruding portion structure.

In some embodiments, as shown in FIG. 4, a distance between the top of the first protruding portion 5 and the common center is R3 mm, and the height h2 of the first protruding portion 5 is the maximum outer surface radius R3 of the first protruding portion 5 minus the thickness H1 of the single-sided area of the negative electrode plate. The height h2 of the first protruding portion 5 is 2 µm-30 µm. When the height of the first protruding portion satisfies the above range, it can avoid the situation where the height of the first protruding portion is too high, making the protruding portion structure fragile and prone to structural fragmentation due to mechanical compression and wear, as well as reducing the lithium intercalation and deintercalation rate of the negative active particles and causing pulverization of the negative active material, and leading to continuous rupture and regeneration of the SEI film, affecting the thickness uniformity of the SEI film and the cycling performance of the battery.

In some embodiments, the height h2 of the first protruding portion is 2 µm-30 µm, for example, it can be 2 µm, 5 µm, 8 µm, 10 µm, 12 µm, 15 µm, 18 µm, 20 µm, 22 µm, 25 µm, 28 µm, 30 µm, or any point value within the range composed of the above two-point values, preferably 5 µm-20 µm. "The height of the first protruding portion" can be interpreted as the maximum vertical distance from the top of the first protruding portion to the surface of the negative electrode active layer (along the second direction), as shown by h2 in FIG. 3.

In some embodiments, an average spacing L2 between adjacent first protruding portions is 0.5 mm-10 mm, for example, it can be 0.5 mm, 0.7 mm, 0.9 mm, 1 mm, 2 mm, 3 mm, 4 mm, 5 mm, 6 mm, 7 mm, 8 mm, 9 mm, 10 mm, or any point value within the range composed of the above two-point values, preferably 0.5-4 mm. "The average spacing between adjacent first protruding portions" can be interpreted as the shortest straight distance between the edges of two adjacent first protruding portions on the surface of the negative electrode plate in the length direction of the negative electrode plate, recorded as the average spacing between adjacent first protruding portions, as shown by L2 in FIG. 3.

In some embodiments, the diameter D2 of the first protruding portion is 0.2 mm-6 mm, for example, it can be 0.2 mm, 0.5 mm, 1 mm, 1.5 mm, 2 mm, 2.5 mm, 3 mm, 3.5 mm, 4 mm, 4.5 mm, 5 mm, 5.5 mm, 6 mm, or any point value within the range composed of the above two-point values, preferably 0.3 mm-2 mm. "The diameter of the first protruding portion" can be interpreted as the maximum straight distance between two edges of a first protruding portion in the direction parallel to the negative electrode plate, as shown by D2 in FIG. 3.

In some embodiments, in the single-sided area of the negative electrode plate, the arrangement of the first recessed portion and the first protruding portion can be uniformly spaced, or adjusted according to actual needs, such as partially uniformly spaced multi-row and multi-column arrangement, or partially non-uniformly spaced multi-row and multi-column arrangement.

In some embodiments, the first recessed portion or the first protruding portion (embossing pattern) is of regular or irregular shape, such as circular, square, hexagonal, other regular shapes, or irregular shapes, preferably regular shape, such as preferably circular.

In some embodiments, in the thickness direction of the negative electrode plate, the first negative electrode active layer and/or the second negative electrode active layer is provided with a plurality of recessed grooves. Specifically, a plurality of recessed grooves can be provided only in the first negative electrode active layer, or only in the second negative electrode active layer, or simultaneously in the first negative electrode active layer and the second negative electrode active layer.

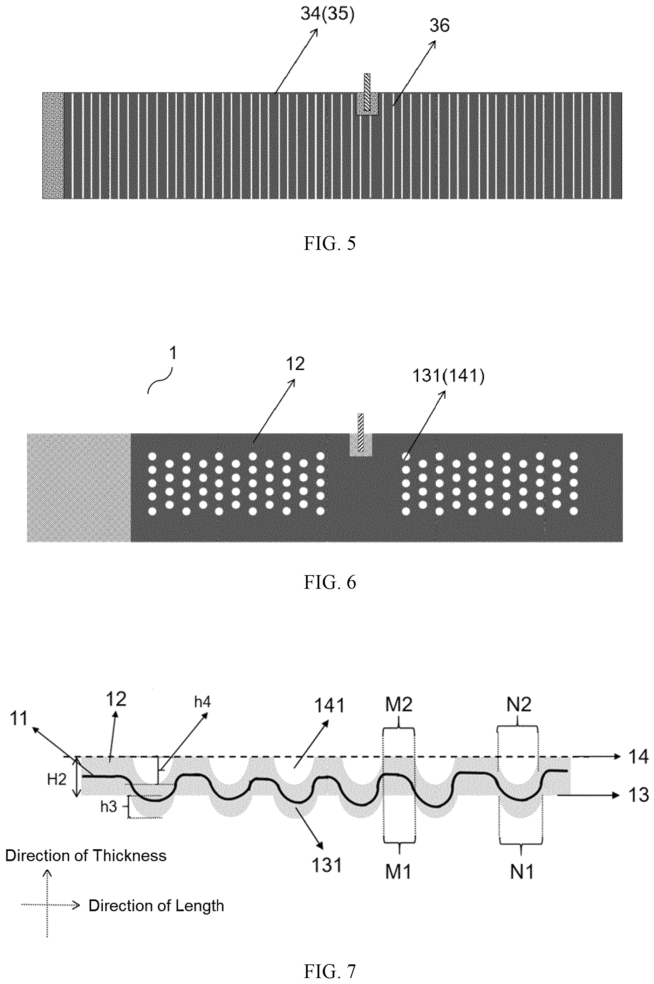

In some embodiments, as shown in FIG. 5, the first negative electrode active layer 34 or the second negative electrode active layer 35 is provided with a plurality of linear recessed grooves 36. The linear recessed grooves can be formed by laser drilling or wire drawing processes. For example, laser drilling uses a high-power density laser beam to irradiate the surface of the negative electrode plate, causing the negative electrode active layer to be quickly heated to the vaporization temperature, evaporating to form holes, allowing the electrolyte solution to rapidly diffuse from the surface aperture of the negative electrode active layer to the interior of the negative electrode, improving the wettability of electrolyte solution to the electrode plates.

In some embodiments, the recessed grooves can be provided in part or all of the regions of the first negative electrode active layer, and/or the recessed grooves can be provided in part or all of the regions of the second negative electrode active layer. For example, the recessed grooves can be provided on the surface of the first negative electrode active layer in the single-sided area, or on the entire surface of the first negative electrode active layer, or only on the surface of the first negative electrode active layer in the bending region. For another example, the recessed grooves can be provided on the entire surface of the second negative electrode active layer, or only on the surface of the second negative electrode active layer in the bending region. The setting position of the recessed grooves in the first negative electrode active layer and the second negative electrode active layer can be selected as needed. Recessed grooves can be formed on the surface of the negative electrode active layer by methods such as laser or embossing.

In some embodiments, a width of the recessed groove is 30 µm-170 µm (for example, it can be 30 µm, 40 µm, 50 µm, 60 µm, 70 µm, 80 µm, 90 µm, 100 µm, 110 µm, 120 µm, 130 µm, 140 µm, 150 µm, 160 µm, 170 µm, or any point value within the range composed of the above two-point values); and/or, the depth of the recessed groove is 3 µm-60 µm (for example, it can be 3 µm, 5 µm, 10 µm, 20 µm, 30 µm, 40 µm, 50 µm, 60 µm, or any point value within the range composed of the above two-point values); and/or, the spacing of the recessed grooves is 0.5 mm-8 mm (for example, it can be 0.5 mm, 0.7 mm, 0.9 mm, 1 mm, 2 mm, 3 mm, 4 mm, 5 mm, 6 mm, 7 mm, 8 mm, or any point value within the range composed of the above two-point values). When the width, depth, and spacing of the recessed groove meet the above range, the combined effect of the recessed groove, the first recessed portion, and the overlapping projections of the negative electrode active layers store more electrolyte solution, further improving the wettability of the electrolyte solution to the electrode plate and the cycling performance of the battery.

In some embodiments, as shown in FIG. 6 and FIG. 7, in the thickness direction of the positive electrode plate 1, the positive electrode plate 1 includes a positive electrode current collector 11, and a positive electrode active layer 12 disposed on both surfaces of the positive electrode current collector 11. The positive electrode plate 1 includes a third surface 13 and a fourth surface 14 arranged opposite to each other, the third surface 13 is provided with a plurality of second protruding portions 131 at intervals. And/or, the fourth surface 14 is provided with a plurality of second recessed portions 141 at intervals. In other embodiments, the fourth surface is provided with a plurality of second protruding portions at intervals, and the third surface is correspondingly provided with a plurality of second recessed portions; where, the thickness of the positive electrode plate is defined as H2 µm, the height of the second protruding portion is defined as h3 µm, L=h3/H2, L=5%-30%.

For example, L can be 5%, 6%, 8%, 10%, 12%, 14%, 16%, 18%, 20%, 22%, 24%, 26%, 28%, 29%, 30%, or any point value within the range composed of the above two-point values. By adjusting the ratio L of the height of the second protruding portion to the thickness of the positive electrode plate, a plurality of appropriately sized protruding portion structures can be formed on the positive electrode plate, increasing the electrolyte solution storage space, promoting the uniform distribution and penetration of the electrolyte solution, and effectively improve the wettability of the electrolyte solution to the positive electrode plate.

The positive electrode plate includes a third surface and a fourth surface. When embossing is performed from the third surface toward the fourth surface, the second protruding portion will form on the fourth surface, while the second recessed portion will form on the third surface. Conversely, when embossing is performed in the opposite direction, the second recessed portion will form on the fourth surface, and the second protruding portion will form on the third surface. Wherever the positive electrode plate contains the second protruding portion and correspondingly also contains the second recessed portion. Where the space composed of the second recessed portion and the second protruding portion can improve the wettability of the electrolyte solution to the electrode plates, enhance the distribution of the electrolyte solution, increase the electrolyte solution storage capacity of the battery, and further improve the cycling performance of the battery.

In some embodiments, a height h3 of the second protruding portion and/or a depth of the second recessed portion is 2 µm-30 µm respectively, for example, it can be 2 µm, 5 µm, 8 µm, 10 µm, 12 µm, 15 µm, 18 µm, 20 µm, 22 µm, 25 µm, 28 µm, 30 µm, or any point value within the range composed of the above two-point values, preferably 5 µm-20 µm. The" height of the second protruding portion" can be interpreted as the maximum vertical distance (in the thickness direction) from the top of the second protruding portion to the third surface of the positive electrode plate, as shown by h3 in FIG. 7. The" depth of the second recessed portion" can be interpreted as the maximum vertical distance (in the thickness direction) from the top of the second recessed portion to the fourth surface of the positive electrode plate, as shown by h4 in FIG. 7.

In some embodiments, an average spacing M1 between adjacent second protruding portions or an average spacing M2 between adjacent second recessed portions is 0.5 mm-10 mm, for example, it can be 0.5 mm, 1 mm, 1.5 mm, 2 mm, 2.5 mm, 3 mm, 3.5 mm, 4 mm, 4.5 mm, 5 mm, 5.5 mm, 6 mm, 6.5 mm, 7 mm, 7.5 mm, 8 mm, 8.5 mm, 9 mm, 9.5 mm, 10 mm, or any point value within the range composed of the above two-point values; the "average spacing between adjacent second protruding portions" can be interpreted as the shortest straight-line distance on the surface of the positive electrode plate between the edges of two nearest adjacent second protruding portions in the length direction of the positive electrode plate, as shown by M1 in FIG. 7; the "average spacing between adjacent second recessed portions" can be interpreted as the shortest straight-line distance on the surface of the positive electrode plate between the edges of two nearest adjacent second recessed portions in the length direction of the positive electrode plate, as shown by M2 in FIG. 7.

In some embodiments, a diameter N1 of the second protruding portion and/or the diameter N2 of the second recessed portion is 0.2 mm-6 mm respectively, for example, it can be 0.2 mm, 1 mm, 1.5 mm, 2 mm, 2.5 mm, 3 mm, 3.5 mm, 4 mm, 4.5 mm, 5 mm, 5.5 mm, 6 mm, or any point value within the range composed of the above two-point values. The "diameter of the second protruding portion" or the "diameter of the second recessed portion" can be interpreted as the maximum straight-line distance between the two edges of two adjacent second protruding portions or two adjacent second recessed portions in the direction parallel to the positive electrode plate, as shown by N1 and N2 in FIG. 7.

In the positive electrode plate, when the second protruding portion and the second recessed portion meet the above conditions, together with the recessed portion set on the single-sided area of the negative electrode plate and the overlapping projections of the negative electrode active layer, the electrolyte solution retention capacity of the battery can be further improved, enhancing the wettability of the electrolyte solution to the electrode plates and the long cycling performance.

In some embodiments, the positive electrode plate includes a positive electrode current collector, and a positive electrode active layer disposed on at least part of the surface of the positive electrode current collector; the positive electrode active layer includes lithium iron phosphate. The lithium iron phosphate battery has good cycling performance, safety performance, and relatively low cost.

In some embodiments, a Dv50 of the lithium iron phosphate is 0.5 µm-2 µm (for example, Dv50 is 0.5 µm, 0.6 µm, 0.7 µm, 0.8 µm, 0.9 µm, 1.0 µm, 1.2 µm, 1.4 µm, 1.5 µm, 1.8 µm, 2.0 µm, or any point value within the range composed of the above two-point values). When the Dv50 of lithium iron phosphate particles is within the above range, the diffusion path of lithium ions is shorter, which can enhance the rate performance of the battery.

In some embodiments, the specific surface area of the lithium iron phosphate is 5 m²/g-20 m²/g (for example, the specific surface area is 5 m²/g, 8 m²/g, 10 m²/g, 12 m²/g, 14 m²/g, 15 m²/g, 16 m²/g, 18 m²/g, 20 m²/g, or any point value within the range formed by the above two-point values). When the specific surface area of lithium iron phosphate particles is within the above range, the side reactions between the lithium iron phosphate active material and the electrolyte solution are reduced, which is beneficial to improving the cycling performance of the battery.

In some embodiments, a press density of the positive electrode plate is 2.5 g/cm³-3 g/cm³, and/or a single-sided surface density of the positive electrode plate is 20 mg/cm²-40 mg/cm².

In some embodiments, a press density of the negative electrode plate is 1.6 g/cm³-1.9 g/cm³, and/or a single-sided surface density of the negative electrode plate is 8 mg/cm²-18 mg/cm².

When the active material of the positive electrode includes lithium iron phosphate, due to the low specific capacity of lithium iron phosphate itself, in order to improve the overall energy density of the battery cell, this invention adjusts the press density and surface density of the positive electrode plate and the negative electrode plate within the above range. As the press density and surface density of the positive and negative electrode plates increase, the dynamics of the battery will decrease, and the wettability of the electrolyte solution to the electrode plates will become difficult. The present invention sets the first recessed portion and recessed groove on the negative electrode plate and the second recessed portion on the positive electrode plate, which can increase the electrolyte solution retention of the positive electrode plate pores, negative electrode plate pores, and separator pores, thereby reducing the impedance at each interface, accelerating the conduction of lithium ions, and improving the cycling performance of the battery.

Although increasing the press density of the positive and negative electrode plates can improve the energy density of the battery, it will cause the wettability of the electrolyte solution to the electrode plates and the active material to deteriorate. Uneven wettability of the electrolyte solution to the electrode plates will lead to uneven distribution of current density, resulting in an unstable solid electrolyte solution interface (SEI) film, affecting the cycling performance of the battery; at the same time, incomplete wettability of the electrolyte solution to the electrode plates directly affects the performance of the battery, leading to lithium deposition and causing a series of safety issues. To solve these problems, this invention further proposes the following solutions.

In some embodiments, the battery includes an electrolyte solution, and the electrolyte solution includes a first solvent and a second solvent; the first solvent includes ethylene carbonate; the second solvent includes at least one of ethyl methyl carbonate, dimethyl carbonate, or diethyl carbonate.

In some embodiments, the total mass of the first solvent and the second solvent accounts for at least 60% of the total mass of the electrolyte solution, and the mass ratio of the first solvent to the second solvent is 0.2-0.6, for example, 0.2, 0.25, 0.3, 0.35, 0.4, 0.45, 0.5, 0.6, or any point value within the range formed by the above two-point values. The viscosity of ethylene carbonate in the first solvent is lower than that of the carbonates listed in the second solvent. When the mass ratio of the first solvent and the second solvent is adjusted within the above range, the viscosity of the electrolyte solution can be reduced, the fluidity of the electrolyte solution can be improved, the wettability of the electrolyte solution to the electrode plates can be enhanced, the problem of poor wettability caused by the increase in the press density of the positive and negative electrode plates can be alleviated, lithium plating can be reduced, and the safety performance of the battery can be improved.

In some embodiments, the electrolyte solution includes a third solvent, and the third solvent includes C4-C8 carboxylic acid ester; the total mass of the third solvent accounts for 0-20% of the total mass of the electrolyte solution. C4-C8 carboxylic acid ester has a lower viscosity. Adding C4-C8 carboxylic acid ester to the electrolyte solution can maintain a lower viscosity of the electrolyte solution, further improve the fluidity of the electrolyte solution, help enhance the wettability of the electrolyte solution to the electrode plates, make the electrolyte solution easier to infiltrate into the center of the jelly roll, and work together with the first recessed portion in the center of the jelly roll and the overlapping projections of the negative electrode active layer to increase the electrolyte solution retention of the battery, improve the transmission rate of lithium ions, and ensure the uniformity of the transmission rate of lithium ions in the thickness direction of the battery cell, thereby improving the high-rate cycling performance of the battery.

In some embodiments, the C4-C8 carboxylic acid ester includes at least one of propyl propionate, ethyl propionate, ethyl acetate, propyl acetate, butyl acetate, methyl propionate, methyl butyrate, ethyl butyrate, or propyl butyrate.

In some embodiments, the negative electrode active material includes a silicon material, and the silicon material includes at least one of silicon oxide, silicon carbon, nano silicon, or silicon alloy.

In some embodiments, the negative electrode active material further includes a carbon material, and the carbon material includes at least one of artificial graphite, natural graphite, hard carbon, or soft carbon.

In some embodiments, the negative electrode active material includes a carbon material and a silicon material, and the mass proportion of silicon is 1% -30%.

The mass proportion of silicon can be tested by thermogravimetric analysis, for example, using a Shimadzu DTG-60 thermogravimetric analyzer. The test conditions include: 5 mg sample, air atmosphere, heating rate 10°C/min from room temperature to 900°C and constant temperature for 40 min. The relationship between the mass proportion of silicon-carbon material (defined as x) and the final weight residue percentage of the entire test (defined as y) is: x=7y/15.

In some embodiments, the negative electrode active layer includes a negative electrode active material, a negative electrode conductive agent, and a negative electrode binder. The types of the negative electrode conductive agent and the negative electrode binder are not specifically limited, and conventional conductive agents and binders in the field can be selected. The types of the negative electrode conductive agent include, but are not limited to, at least one of conductive carbon black, acetylene black, Keqin black, conductive graphite, conductive carbon fiber, carbon nanotubes, or metal powder. The negative electrode binder includes, but is not limited to, at least one of styrene-butadiene rubber emulsion, polytetrafluoroethylene emulsion, sodium carboxymethyl cellulose, sodium alginate, polyvinyl alcohol, polyacrylic acid, lithium polyacrylate, sodium polyacrylate, or carboxylated chitosan.

In some embodiments, the positive electrode active layer includes a positive electrode active material, a positive electrode conductive agent, and a positive electrode binder. The positive electrode conductive agent is not specifically limited, and conventional conductive agents in the field can be selected, including but not limited to one or more of acetylene black, conductive carbon black, Keqin black, conductive graphite, carbon nanotubes, conductive carbon fiber, or graphene. The positive electrode binder is not specifically limited, and conventional binders in the field can be selected, including but not limited to one or more of polyvinylidene fluoride, polytetrafluoroethylene, sodium carboxymethyl cellulose, styrene-butadiene rubber, or polyethylene oxide.

In this invention, the type of the separator is not specifically limited, and conventional lithium-ion battery separators in the field can be selected, including but not limited to woven membranes, non-woven membranes (non-woven fabrics), microporous membranes, composite membranes, separator paper, calendered membranes, polyethylene microporous membranes, and polypropylene microporous membranes.

The following will clearly and completely describe the technical solutions in the examples of this invention with reference to the examples of this invention. Obviously, the described examples are only a part of the examples of this invention, not all of them. Based on the examples in the present invention, all other examples obtained by those skilled in the art without creative work fall within the protection scope of the present invention.

The materials, reagents, etc. used in the following examples, unless otherwise specified, can be obtained from commercial sources.

The present invention is described in detail below with reference to specific examples, which are intended to illustrate rather than limit the present invention.

### Example 1-1

### 1. Preparation of a positive electrode plate.

Lithium iron phosphate, conductive agent, and PVDF were mixed in a mass ratio of 97.60:1.35:1.05 in NMP, stirred uniformly to prepare a positive electrode slurry; the positive electrode slurry was uniformly coated on both sides of aluminum foil with a coating surface density of 0.02 g/cm²; after drying, rolling (press density of 2.65 g/cm³), and cutting, the positive electrode plate was obtained; the thickness H2 of the positive electrode plate was 100 µm.

### 2. Preparation of a negative electrode plate.

Artificial graphite, conductive carbon black, styrene-butadiene rubber, and sodium carboxymethyl cellulose were mixed in a mass ratio of 97.2:0.5: 1.3:1 in deionized water; the slurry was stirred uniformly to prepare a negative electrode slurry; the negative electrode slurry was uniformly coated on the negative electrode current collector copper foil with a coating surface density of 8.1 g/cm², followed by drying, rolling (press density of 1.73 g/cm³), and cutting to obtain the negative electrode plate; the single-sided area of the cut negative electrode plate was processed with a special roller containing protruding portion, embossing from the side of the exposed copper foil towards the side of the negative electrode slurry, with a depth h1 of the first recessed portion of 10 µm, an average spacing L1 between adjacent first recessed portions of 3.0 mm, and a diameter D1 of the first recessed portion of 1.0 mm. The depth h2 of the first protruding portion was 20 µm, the average spacing L2 between adjacent first protruding portions was 3.0 mm, and the diameter D2 of the first protruding portion was 1.0 mm.

### 3. Preparation of a separator.

The separator in present invention adopts a 5 µm thick substrate + 2 µm boehmite + 2 µm PVDF.

### 4. Preparation of an electrolyte solution.

The electrolyte solution includes lithium salt LiPF₆, solvent, and additives vinylene carbonate (VC), fluoroethylene carbonate (FEC), 1,3-propane sultone (PS), and ethylene sulfate (DTD), with the solvent including ethylene carbonate (EC) and ethyl methyl carbonate (EMC) in a mass ratio of EC:EMC=3:7; the contents of VC, FEC, PS, and DTD in the electrolyte solution are 1.5%, 1%, 1%, and 0.5%, respectively.

### 5. Preparation of a lithium-ion battery.

After stacking the cut positive electrode plate, separator, and negative electrode plate in sequence, they were wound into a wound-structured battery cell, with the projection of the leading end of the first negative electrode active layer and the leading end of the second negative electrode active layer overlapping along the thickness direction of the jelly roll, followed by encapsulation, liquid injection, formation, and secondary sealing to obtain the lithium-ion battery.

### 6. Battery performance testing.

(1) Calculation of the liquid retention coefficient: Liquid retention coefficient = Liquid retention amount / Battery capacity. According to the production process, inject a certain amount of electrolyte solution, then the battery undergoes formation and sorting, during which part of the electrolyte solution will be consumed. During the second sealing process, the excess electrolyte solution will be extracted and sealed. Liquid retention = battery cell mass + electrolyte solution injection volume - battery cell mass after second sealing.

### (2) Cycling performance at 25°C.

Measure the thickness D0 of a fully charged battery cell, place the battery in an environment of (25±3)°C, charge the battery to 3.65V with a constant current of 2C and 2.5C, then charge at a constant voltage of 3.65V until the cut-off current of 0.05C, and then discharge at 0.5C. Record the initial capacity Q0, perform the cycle according to the steps in the above instructions, cycle 2000 times, and take the discharge capacity of this time as the battery capacity Q3. Calculate the capacity retention rate (%), then fully charge the battery again, remove the battery cell, measure the fully charged thickness D3, calculate the thickness change rate (%), and record the results. The calculation formulas used are as follows: Thickness expansion rate (%) = (D3 - D0) / D0 × 100%; Capacity retention rate (%) = Q3 / Q0 × 100%.

### (3) Cycling performance at 45°C.

Measure the thickness D0 of a fully charged battery cell, place the battery in an environment of (45±3)°C, charge the battery to 3.65V with a constant current of 2C, then charge at a constant voltage of 3.65V until the cut-off current of 0.05C, and then discharge at 0.5C. Record the initial capacity Q0, perform the cycle according to the steps in the above instructions, cycle 1500 times, and take the discharge capacity of this time as the battery capacity Q3. Calculate the capacity retention rate (%), then fully charge the battery again, remove the battery cell, measure the fully charged thickness D3, calculate the thickness change rate (%), and record the results as shown in Table 2. The calculation formulas used are as follows. Thickness expansion rate (%) = (D3 - D0) / D0 × 100%; Capacity retention rate (%) = Q3 / Q0 × 100%.

Example groups 1-4 and comparative examples 1-6 refer to Example 1-1, with the main differences shown in Table 1. Among them, the depth h1 of the first recessed portion is changed in Example group 1 and Comparative examples 1 and 2. The average spacing L1 between adjacent first recessed portions is changed in Example group 2. The diameter D1 of the first recessed portion is changed in Example group 3. The mass proportion of fluoroethylene carbonate (FEC) in the electrolyte solution is changed in Example group 4 and Comparative examples 2 and 3. Comparative example 1 has an L value that is too small and not within the protection range. The first recessed portion is not set in the negative electrode plate in Comparative example 5, and the projections of the first negative electrode active layer and the second negative electrode active layer do not overlap in Comparative example 6.

**Table 1**

| | Depth h1 of the first recessed portion/ µm | Average spacing L1 of the first recessed portion/ mm | Diameter D1 of the first recessed portion/ mm | FEC Conte nt | Capacity retention rate at 25°C (2000 cycles)/2C | Thickness expansion rate at 25°C(2000 cycles)/2C | Capacity retention rate at 45°C (1500 cycles)/2C | Thickness expansion rate at 45°C(1500 cycles)/2C | Liquid retention coefficient |
|---|---|---|---|---|---|---|---|---|---|
| Example 1-1 | 10 | 3 | 1 | 1.5% | 79.8% | 7.4% | 78.5% | 7.7% | 2.82 |
| Example 1-2 | 20 | 3 | 1 | 1.5% | 83.5% | 5.1% | 79.6% | 5.5% | 2.95 |
| Example 1-3 | 2.2 | 3 | 1 | 1.5% | 79.2% | 9.5% | 69.8% | 9.2% | 2.71 |
| Example 1-4 | 29 | 3 | 1 | 1.5% | 80.3% | 6.2% | 76.8% | 6.9% | 3.12 |
| Example 2-1 | 10 | 6 | 1 | 1.5% | 76.3% | 9.9% | 71.2% | 11.5% | 2.65 |
| Example 2-2 | 10 | 0.6 | 1 | 1.5% | 80.5% | 6.0% | 76.3% | 6.3% | 3.15 |
| Example 2-4 | 10 | 9.5 | 1 | 1.5% | 75.1% | 11.4% | 69.2% | 12.2% | 2.53 |
| Example 3-1 | 10 | 3 | 5 | 1.5% | 77.3% | 10.4% | 75.2% | 9.8% | 3.01 |
| Example 3-2 | 10 | 3 | 0.25 | 1.5% | 76.2% | 10.4% | 77.2% | 11.8% | 2.62 |
| Example 3-3 | 10 | 3 | 5.8 | 1.5% | 77.1% | 10.6% | 73.2% | 10.6% | 3.08 |
| Example 4-1 | 10 | 3 | 1 | 0.5% | 77.9% | 8.2% | 73.5% | 7.3% | 2.82 |
| Example 4-2 | 10 | 3 | 1 | 4.0% | 74.3% | 10.2% | 71.2% | 12.3% | 2.84 |
| Comparative Example 1 | 1 | 3 | 1 | 1.5% | 75.5% | 10.8% | 71.2% | 11.2% | 2.56 |
| Comparative Example 2 | 35 | 3 | 1 | 1.5% | 76.4% | 9.2% | 75.2% | 9.3% | 3.22 |
| Comparative Example 3 | 10 | 3 | 1 | 0.2% | 73.9% | 11.2% | 70.2% | 8.3% | 2.82 |
| Comparative Example 4 | 10 | 3 | 1 | 10.0 % | 68.9% | 14.6% | 64.4% | 16.3% | 2.82 |
| Comparative Example 5 | / | / | / | 1.5% | 73.2% | 11.3% | 71.3% | 14.3% | 2.35 |
| Comparative Example 6 | 10 | 3 | 1 | 1.5% | 69.2% | 14.5% | 65.1% | 18.3% | 2.23 |

| | | | | | | | | | |
|---|---|---|---|---|---|---|---|---|---|
| Note: the "/" indicates the corresponding parameter was not measured. | | | | | | | | | |

As can be seen from Table 1, the wound lithium-ion battery provided by the present invention, with the combined effect of the recessed portion and the overlapping projections of the negative electrode active layer, can increase the liquid retention at the center of the jelly roll, improve the wettability of the electrolyte solution to the electrode plates, enhance the cycling performance of the battery, and reduce battery expansion.

The example group 5 refers to Example 1-1, with the main differences shown in Table 2. In the example group 5, the radius R1 and radius R2 of the first protruding portion are changed.

**Table 2**

| | Radius R1/mm | Radius R2/mm | R1/R2 | Capacity retention rate at 25°C (2000 cycles)/2C | Thickness expansion rate at 25°C(2000 cycles)/2C | Capacity retention rate at 45°C (1500 cycles)/2C | Thickness expansion rate at 45°C(1500 cycles)/2C | Liquid retention coefficient |
|---|---|---|---|---|---|---|---|---|
| Example 1-1 | 2.05 | 2.00 | 1.03 | 79.8% | 7.4% | 78.5% | 7.7% | 2.82 |
| Example 5-1 | 0.60 | 0.550 | 1.09 | 76.3% | 9.9% | 71.2% | 11.5% | 2.63 |
| Example 5-2 | 2.90 | 2.80 | 1.04 | 78.5% | 7.8% | 73.6% | 8.2% | 3.08 |
| Example 5-3 | 2.00 | 1.70 | 1.18 | 73.2% | 11.1% | 70.1% | 8.3% | 2.85 |

As can be seen from Table 2, when R1 and R2 are defined, and R1/R2 satisfies the protection scope of the present invention, the cycling performance of the battery can be improved, and battery expansion can be reduced.

The example group 6 refers to Example 1-1, with the main differences shown in Table 3. In the example group 6, the negative electrode plate after slitting is laser-grooved, and grooves are set on the entire surface of the negative electrode plate, where the grooves are matrix grooves; the laser-treated negative electrode plate is cleaned and then made into a negative electrode plate. In the example group 6, the width, depth, and spacing of the recessed grooves are changed.

**Table 3**

| | Width of recessed groove/ µm | Depth of recessed groove/ µm | Spacing of recessed grooves/ mm | Capacity retention rate at 25°C (2000 cycles)/2C | Thickness expansion rate at 25°C(2000 cycles)/2C | Capacity retention rate at 45°C (1500 cycles)/2C | Thickness expansion rate at 45°C(1500 cycles)/2C | Liquid retention coefficient |
|---|---|---|---|---|---|---|---|---|
| Example 1-1 | / | / | / | 79.8% | 7.4% | 78.5% | 7.7% | 2.82 |
| Example 6-1 | 80.00 | 20.00 | 3.00 | 84.2% | 5.4% | 80.5% | 5.7% | 3.12 |
| Example 6-2 | 165.00 | 55.00 | 7.80 | 80.2% | 7.2% | 79.6% | 7.4% | 3.32 |
| Example 6-3 | 35.00 | 3.50 | 7.80 | 80.5% | 7.1% | 76.3% | 7.9% | 2.96 |

| | | | | | | | | |
|---|---|---|---|---|---|---|---|---|
| Note: the "/" indicates the corresponding parameter was not measured. | | | | | | | | |

As can be seen from Table 3, the combined effect of the recessed groove, the first recessed portion, and the overlapping projections of the negative electrode active layer can further enhance the liquid retention of the battery, thereby improving the cycling performance of the battery.

Example 7 group was conducted with reference to Example 1-1, with the main differences listed in Table 4. Where, the slit positive electrode plate was processed by a special roller with protrusions to form a protruding portion. In Example 7-1, the depth of the second recessed portion was 20 µm, the average spacing of the second recessed portions was 230 µm, and the diameter of the second recessed portion was 100 µm. In Examples 7-2 to 7-5, the depth of the second recessed portion was changed.

**Table 4**

| | Positive electrode embossing depth h3/µm | L=h3/H2 | Capacity retention rate at 25°C (2000 cycles)/2C | Thickness expansion rate at 25°C(2000 cycles)/2C | Capacity retention rate at 45°C (1500 cycles)/2C | Thickness expansion rate at 45°C(1500 cycles)/2C | Liquid retention coefficient |
|---|---|---|---|---|---|---|---|
| Example 7-1 | 20.00 | 20.0% | 85.4% | 4.8% | 81.7% | 5.4% | 3.22 |
| Example 7-2 | 5.20 | 5.2% | 81.4% | 6.8% | 78.5% | 6.9% | 3.04 |
| Example 7-3 | 29.00 | 29.0% | 81.9% | 7.2% | 78.9% | 6.6% | 3.32 |
| Example 7-4 | 35.00 | 35.0% | 72.3% | 14.0% | 69.2% | 14.2% | 3.42 |
| Example 7-5 | 3.00 | 3.0% | 73.2% | 11.1% | 70.1% | 8.3% | 2.85 |

As can be seen from Table 4, when the positive electrode plate is embossed with the second protruding portion and the second recessed portion and meets the conditions of this invention, the combination with the recessed portion on the single-sided area of the negative electrode plate and the overlapping projections of the negative electrode active layer can further enhance the liquid retention of the battery, improving the long cycling performance of the battery.

Example 8 group was conducted with reference to Example 1-1, with the main differences listed in Table 5. Among them, the Example 8 group changed the Dv50 and specific surface area of lithium iron phosphate.

**Table 5**

| | Dv50 of lithium iron phosphate /µm | Specific surface area/m²/g of lithium iron phosphate | Capacity retention rate at 25°C (2000 cycles)/2C | Thickness expansion rate at 25°C(2000 cycles)/2C | Capacity retention rate at 45°C (1500 cycles)/2C | Thickness expansion rate at 45°C(1500 cycles)/2C | Liquid retention coefficient |
|---|---|---|---|---|---|---|---|
| Example 1-1 | 1.00 | 10.00 | 79.8% | 7.4% | 78.5% | 7.7% | 2.82 |
| Example 8-1 | 0.55 | 18.00 | 76.8% | 9.7% | 70.2% | 11.8% | 2.78 |
| Example 8-2 | 1.90 | 6.00 | 77.3% | 8.6% | 72.4% | 9.2% | 2.79 |

As can be seen from Table 5, when the Dv50 and specific surface area of lithium iron phosphate particles are within the range of this invention, the rate performance and cycling performance of the battery can be improved.

Example 9 group and Example 10 group were conducted with reference to Example 1-1, with the main differences listed in Table 6. Among them, in the Example 9 group, the ratio of the first solvent and the second solvent was changed, and the type of the second solvent was also changed. In Example 9-3, the second solvent was a combination of ethyl methyl carbonate (60%) and dimethyl carbonate (10%); in Example 9-4, the second solvent was a combination of ethyl methyl carbonate (60%), dimethyl carbonate (5%), and diethyl carbonate (5%). In the Example 10 group, carboxylic acid esters were also added to the electrolyte solution. In Example 10-1, ethyl acetate was added; in Example 10-2, the amount of carboxylic acid ester added was changed; in Example 10-3, ethyl propionate was added; in Example 10-4, a combination of ethyl propionate (5%) and propyl propionate (5%) was added.

**Table 6**

| | First solvent content | Second solvent content | The total mass proportion of the first solvent and the second solvent | The mass ratio of the first solvent and the second solvent | Carboxylic acid ester content | Capacity retention rate at 25°C (2000 cycles)/2 C | Thickness expansion rate at 25°C(200 0 cycles)/2 C | Capacity retention rate at 45°C (1500 cycles)/2 C | Thickness expansion rate at 45°C (1500 cycles)/2 C | Liquid retention coefficient |
|---|---|---|---|---|---|---|---|---|---|---|
| Example 1-1 | 30% | 70% | 100.00% | 0.43 | / | 79.8% | 7.4% | 78.5% | 7.7% | 2.82 |
| Example 9-1 | 16.70% | 83.30% | 100.00% | 0.2 | / | 76.5% | 9.2% | 70.6% | 10.2% | 2.85 |
| Example 9-2 | 33.30% | 66.70% | 100.00% | 0.5 | / | 77.7% | 8.4% | 72.1% | 9.5% | 2.78 |
| Example 9-3 | 30% | 60%+ 10% | 100%% | 0.43 | / | 80.6% | 7.4% | 79.6% | 7.3% | 2.83 |
| Example 9-4 | 30% | 60%+ 5%+ 5% | 100%% | 0.43 | / | 78.3% | 8.2% | 77.5% | 8.3% | 2.85 |
| Example 10-1 | 30.00% | 60.00% | 90.00% | 0.5 | 10% | 79.6% | 7.2% | 76.8% | 7.8% | 2.76 |
| Example 10-2 | 30.00% | 50.00% | 80.00% | 0.6 | 20% | 81.5% | 7.1% | 80.8% | 7.0% | 2.74 |
| Example 10-3 | 30% | 60% | 90.00% | 0.5 | 10% | 77.5% | 9.0% | 75.1% | 8.9% | 2.75 |
| Example 10-4 | 30% | 50% | 90.00% | 0.5 | 5%+5% | 76.6% | 9.5% | 74.3% | 9.1% | 2.76 |

| | | | | | | | | | | |
|---|---|---|---|---|---|---|---|---|---|---|
| Note: the "/" indicates the corresponding parameter was not measured. | | | | | | | | | | |

As can be seen from Table 6, the combined use of the first solvent and the second solvent in the electrolyte solution can increase the liquid retention of the battery and improve the cycling performance of the battery. The addition of carboxylic acid ester solvent to the electrolyte solution can improve the high-rate cycling performance of the battery.

It should be noted that in this document, the terms "include", "comprise", or any other variations thereof are intended to cover non-exclusive inclusion, so that a process, method, article, or device that includes a series of elements not only includes those elements, but also includes other elements that are not explicitly listed, or also includes elements inherent to such process, method, article, or device. In the absence of more restrictions, the element defined by the statement "including one..." does not exclude the existence of additional identical elements in the process, method, article, or device that includes the element. In addition, it should be pointed out that the scope of the methods and devices in the examples of this application is not limited to performing functions in the order shown or discussed, but may also include performing functions in a substantially simultaneous manner or in the reverse order according to the functions involved. For example, the described methods can be executed in an order different from the described order, and various steps can also be added, omitted, or combined. Furthermore, features described with reference to certain examples can be combined in other examples.

The above description is only a preferred example of the present invention and is not intended to limit the present invention. Any modifications, equivalent replacements, etc., made within the spirit and principles of the present invention should be included within the protection scope of the present invention.

## Claims

1. A wound lithium-ion battery, **characterized by** comprising a positive electrode plate(1), a negative electrode plate(3), an electrolyte solution, and a separator(2) located between the positive electrode plate(1) and the negative electrode plate(3), the positive electrode plate(1), the separator(2), and the negative electrode plate(3) are stacked and wound multiple times along a winding direction to form a jelly roll; wherein
the negative electrode plate(3) comprises:
a negative electrode current collector layer(33), comprising a first surface(331) and a second surface(332) oppositely arranged along a second direction, wherein a first direction is perpendicular to the second direction; and
a first negative electrode active layer(34) located on the first surface(331) and a second negative electrode active layer(35) located on the second surface(332); wherein along the first direction, a leading end of the first negative electrode active layer(34) extends beyond a leading end of the second negative electrode active layer(35); a portion where the leading end of the first negative electrode active layer(34) extends beyond the leading end of the second negative electrode active layer(35) is a single-sided area(32) of the negative electrode plate(3);
wherein at least a portion of the second surface(332) in the single-sided area(32) is recessed toward the first surface(331) to form a plurality of first recessed portions(4); a depth h1 of the first recessed portion(4) is 2 µm-30 µm;
the negative electrode plate(3) comprises a straight region and a bending region, the leading end of the first negative electrode active layer(34) and the leading end of the second negative electrode active layer(35) are located in different bending regions, and the projections of the leading end of the first negative electrode active layer(34) and the leading end of the second negative electrode active layer(35) overlap in the thickness direction of the jelly roll; and
the electrolyte solution comprises fluoroethylene carbonate, and the mass proportion of fluoroethylene carbonate is 0.5%-4% based on a total mass of the electrolyte solution.

2. The wound lithium-ion battery according to claim 1, **characterized in that** an average spacing L1 between adjacent first recessed portions(4) is 0.5 mm-10 mm;
and/or, a diameter D1 of the first recessed portion is 0.2 mm-6 mm.

3. The wound lithium-ion battery according to claim 1 or 2, **characterized in that** the depth h1 of the first recessed portion(4) is 5 µm-20 µm;
and/or, an average spacing L1 between adjacent first recessed portions(4) is 0.5 mm-4 mm;
and/or, a diameter D1 of the first recessed portion(4) is 0.3 mm-2 mm.

4. The wound lithium-ion battery according to claim 1, **characterized in that** in the single-sided area(32), a plurality of first recessed portions(4) are formed by at least a portion of the second surface(332) being recessed toward the first surface(331), and a plurality of first protruding portions(5) are correspondingly formed on the first surface;
the outer surface of the first protruding portion(5) is provided with a first circumscribed sphere(51), and the inner surface of the first protruding portion(5) is provided with a second circumscribed sphere(52), the first circumscribed sphere(51) and the second circumscribed sphere(52) share a common center; and
a radius of the first circumscribed sphere(51) is defined as R1 mm, and the radius of the second circumscribed sphere(52) is defined as R2 mm, and a ratio of R1 to R2 satisfy that: R1/R2=1.01-1.1.

5. The wound lithium-ion battery according to claim 4, **characterized in that** R1 is 0.15 mm-3 mm, and/or, R2 is 0.01 mm-3 mm.

6. The wound lithium-ion battery according to claim 4 or 5, **characterized in that** a distance between the top of the first protruding portion(5) and the common center is R3 mm, a height h2 of the first protruding portion(5) is the maximum outer surface radius R3 of the first protruding portion(5) minus the thickness H1 of the single-sided area(32) of the negative electrode plate, and the height h2 of the first protruding portion(5) is 2 µm-30 µm;
and/or, an average spacing L2 between adjacent first protruding portions(5) is 0.5 mm-10 mm;
and/or, a diameter D2 of the first protruding portion(5) is 0.2 mm-6 mm.

7. The wound lithium-ion battery according to claim 1, **characterized in that** in the single-sided area(32), a plurality of first recessed portions(4) are formed by at least a portion of the second surface(332) being recessed toward the first surface(331), and a plurality of first protruding portions(5) are correspondingly formed on the first surface;
the height h2 of the first protruding portion(5) is 5 µm-20 µm;
and/or, the average spacing L2 between adjacent first protruding portions(5) is 0.5 mm-4 mm;
and/or, the diameter D2 of the first protruding portion(5) is 0.3 mm-2 mm.

8. The wound lithium-ion battery according to any one of claims 1 to 7, **characterized in that** in the thickness direction of the negative electrode plate(3), the first negative electrode active layer(34) and/or the second negative electrode active layer(35) is provided with a plurality of recessed grooves;
preferably, a width of the recessed groove is 30 µm-170 µm; and/or, a depth of the recessed groove is 3 µm-60 µm; and/or, a spacing of the recessed grooves is 0.5 mm-8 mm.

9. The wound lithium-ion battery according to claim 8, **characterized in that** the width of the recessed groove is 40 µm-100 µm; and/or, the depth of the recessed groove is 3 µm-30 µm; and/or, the spacing of the recessed grooves is 1 mm-5 mm.

10. The wound lithium-ion battery according to any one of claims 1 to 9, **characterized in that** in the thickness direction of the positive electrode plate(1), the positive electrode plate(1) comprises a third surface(13) and a fourth surface(14) arranged opposite to each other, the third surface(13) is provided with a plurality of second protruding portions(131) at intervals, and the fourth surface(14) is correspondingly provided with a plurality of second recessed portions(141); and/or, the fourth surface is provided with a plurality of second protruding portions(131) at intervals, and the third surface(13) is correspondingly provided with a plurality of second recessed portions(141); and
a thickness of the positive electrode plate(1) is defined as H2 µm, a height of the second protruding portion(131) is defined as h3 µm, L=h3/H2, L=5%-30%.

11. The wound lithium-ion battery according to claim 10, **characterized in that** the height h3 of the second protruding portion(131) and/or a depth of the second recessed portion(141) is 2 µm-30 µm, preferably, 5 µm-20 µm;
and/or, an average spacing M1 between adjacent second protruding portions(131) or an average spacing M2 between adjacent second recessed portions(141) is 0.5 mm-10 mm;
and/or, a diameter N1 of the second protruding portion(131) and/or a diameter N2 of the second recessed portion(141) is 0.2 mm-6 mm.

12. The wound lithium-ion battery according to any one of claims 1 to 11, **characterized in that** the positive electrode plate(1) comprises a positive electrode current collector(11), and a positive electrode active layer(12) disposed on at least a part of the surface of the positive electrode current collector(11); the positive electrode active layer(12) comprises lithium iron phosphate;
preferably, a Dv50 of the lithium iron phosphate is 0.5 µm-2 µm;
preferably, a specific surface area of the lithium iron phosphate is 5 m²/g-20 m²/g.

13. The wound lithium-ion battery according to any one of claims 1 to 12, **characterized in that** a press density of the positive electrode plate(1) is 2.5 g/cm³-3 g/cm³;
and/or, a single-sided surface density of the positive electrode plate(1) is 20 mg/cm²-40 mg/cm²;
and/or, a press density of the negative electrode plate(3) is 1.6 g/cm³-1.9 g/cm³;
and/or, a single-sided surface density of the negative electrode plate(3) is 8 mg/cm²-18 mg/cm².

14. The wound lithium-ion battery according to any one of claims 1 to 13, **characterized in that** the electrolyte solution comprises a first solvent and a second solvent;
the first solvent comprises ethylene carbonate;
the second solvent comprises at least one of ethyl methyl carbonate, dimethyl carbonate, or diethyl carbonate;
preferably, the total mass of the first solvent and the second solvent accounts for at least 60% of the total mass of the electrolyte solution;
preferably,, a mass ratio of the first solvent to the second solvent is 0.2-0.6.

15. The wound lithium-ion battery according to any one of claims 1 to 14, **characterized in that** the electrolyte solution comprises a third solvent, and the third solvent comprises C4-C8 carboxylic acid ester;
the total mass of the third solvent accounts for 0-20% of the total mass of the electrolyte solution; and
the C4-C8 carboxylic acid ester comprises at least one of propyl propionate, ethyl propionate, ethyl acetate, propyl acetate, butyl acetate, methyl propionate, methyl butyrate, ethyl butyrate, or propyl butyrate.
